# EUROPEAN PATENT APPLICATION

(11) **EP 3 388 404 A1**
(43) Date of publication of application: **17.10.2018**
(21) Application number: 16872775.8
(22) Date of filing: 16.11.2016
(51) Int. Cl.: C04B 26/14, C04B 14/06, C04B 26/06, C08F 290/06

(54) **MORTAR COMPOSITION AND METHOD FOR MANUFACTURING SAME, CONCRETE STRUCTURE, AND CONCRETE FRAMEWORK FOUNDATION ADJUSTING METHOD**

(30) Priority: 07.12.2015 JP 2015238589
(71) Applicant: Showa Denko K.K., Tokyo 105-8518 (JP)
(72) Inventor: NAKAMURA, Kimihiko, Tokyo 105-8518 (JP); MUKUNO, Hidekazu, Tokyo 105-8518 (JP); FUJITA, Ryuichi, Tokyo 105-8518 (JP)
(74) Representative: Regimbeau
(86) International application number: PCT/JP2016/083988
(87) International publication number: WO 2017/098875

(57) **Abstract**

The mortar composition according to this invention contains: an oil-in-water type emulsion composition, which contains a (meth)acrylate-based epoxy resin, a polymerizable unsaturated monomer, a curing accelerator, a reactive surfactant and water; a curing agent; and an aggregate. In addition, the method for producing a mortar composition according to this invention includes: a step of obtaining an oil-in-water type emulsion composition by mixing a (meth)acrylate-based epoxy resin, a polymerizable unsaturated monomer, a curing accelerator and a reactive surfactant, and then adding water dropwise so as to effect phase inversion emulsification; and a step of combining and mixing a curing agent and an aggregate with the oil-in-water type emulsion composition.

## Description

### Technical Field

This invention relates to a mortar composition, a method for producing same, a concrete structure, and a concrete framework foundation adjusting method.

### Background Art

In order to impart a concrete structure with anti-corrosion properties in the past, an anti-corrosion layer was formed by coating an anti-corrosion material on a concrete framework and then curing the anti-corrosion material. In addition, in cases where steps, pockmarks and the like are present in a concrete framework, a foundation layer is formed by coating a foundation adjusting material on the concrete framework and then curing the foundation adjusting material before an anti-corrosion layer is formed, in order to ensure surface smoothness. In cases where a foundation layer is formed on a surface of a concrete framework, an anti-corrosion material contracts during curing, and as a result, the anti-corrosion layer readily detaches from the foundation layer and curling of the anti-corrosion layer can occur. In order to prevent this problem, a suitable foundation adjusting material is selected and used according to the type of anti-corrosion material. For example, in cases where an anti-corrosion material containing a vinyl ester resin is used, a foundation adjusting material containing a vinyl ester resin as a primary component is used.

In recent years, there has been interest in foundation adjusting materials that contain as little organic solvent as possible from the perspectives of conserving resources and environmental preservation. Mortar compositions obtained using vinyl ester resins, polyester resins, epoxy resins, acrylic resins, and the like, are known as such foundation adjusting materials (for example, see Patent Documents 1 and 2).

However, such mortar compositions suffer from the problem of requiring a long time until the desired strength is achieved (a long curing time). In order to achieve early strength, a quick hardening or rapid hardening cement should be used as a cement blended with a mortar composition, but foundation layers formed from such mortar compositions readily undergo anti-corrosion layer curling and exhibit insufficient adhesion to an anti-corrosion layer.

In addition, blending an admixture in the form of an emulsion with a mortar composition is a feature that is known in order to shorten the curing time and improve adhesion to an anti-corrosion layer (for example, see Patent Document 3) .

However, depending on the type of admixture blended with the mortar composition, a curing reaction of an anti-corrosion material may be impaired, and sufficient adhesion between a foundation layer and an anti-corrosion layer may not be ensured. Furthermore, normal temperature curing may be difficult, and a deterioration in workability, early strength or hardenability may occur.

### Citation List

### Patent Literature

[Patent Document 1] Japanese Patent Application Publication No. 2011-236108
[Patent Document 2] Japanese Patent Application Publication No. H09-208283
[Patent Document 3] Japanese Patent Application Publication No. 2007-204333

### Summary of Invention

### Technical Problem

This invention has been developed in order to solve problems such as those mentioned above, and a purpose of this invention is to provide a mortar composition which can be cured at normal temperature, exhibits excellent workability, early strength and hardenability, and can form a foundation layer having good adhesion to an anti-corrosion layer; a method for producing same; and a concrete framework foundation adjusting method. Another purpose of this invention is to provide a concrete structure provided with a foundation layer having characteristics such as those mentioned above.

### Solution to Problem

As a result of diligent research into how to solve problems such as those mentioned above, the inventors of this invention found that characteristics suitable for a foundation adjusting material could be achieved by combining an oil-in-water type emulsion composition containing specific components with a curing agent and an aggregate, and thereby completed this invention.

That is, this invention comprises items (1) to (13) below.
(1) A mortar composition containing: an oil-in-water type emulsion composition, which contains a (meth)acrylate-based epoxy resin, a polymerizable unsaturated monomer, a curing accelerator, a reactive surfactant and water; a curing agent; and an aggregate.
(2) The mortar composition of item (1) above, containing 1 to 200 parts by mass of the polymerizable unsaturated monomer, 0.1 to 10 parts by mass of the curing accelerator, 1 to 50 parts by mass of the reactive surfactant and 10 to 200 parts by mass of water relative to 100 parts by mass of the (meth)acrylate-based epoxy resin.
(3) The mortar composition of item (1) or (2) above, containing 1 to 30 parts by mass of the curing agent and 5 to 300 parts by mass of the aggregate relative to 100 parts by mass of the oil-in-water type emulsion composition.
(4) The mortar composition of any one of items (1) to (3) above, wherein the reactive surfactant is at least one type selected from the group consisting of an ionic reactive surfactant and a non-ionic reactive surfactant.
(5) The mortar composition of item (4) above, wherein the ionic reactive surfactant is an anionic reactive surfactant.
(6) The mortar composition of any one of items (1) to (5) above, wherein the polymerizable unsaturated monomer is at least one type selected from the group consisting of an alkyl (meth)acrylate, an alkenyl (meth)acrylate, an alkylene glycol di(meth)acrylate, an alkoxyalkyl (meth)acrylate, a dialkylamino alkyl (meth)acrylate, acrylonitrile, styrene and derivatives thereof, and vinyl compounds other than these.
(7) The mortar composition of any one of items (1) to (6) above, wherein the curing accelerator is at least one type selected from the group consisting of a metal acetylacetate, a metal soap, a vanadium compound, a metal sulfide and an amine.
(8) The mortar composition of any one of items (1) to (7) above, wherein the curing agent is at least one type selected from the group consisting of a ketone peroxide, a hydroperoxide and a peroxy ester.
(9) The mortar composition of any one of items (1) to (8) above, wherein the (meth)acrylate-based epoxy resin is an ester compound of methacrylic acid and a novolac type epoxy resin or bisphenol A type epoxy resin.
(10) A method for producing a mortar composition, the method including:
   a step of obtaining an oil-in-water type emulsion composition by mixing a (meth)acrylate-based epoxy resin, a polymerizable unsaturated monomer, a curing accelerator and a reactive surfactant, and then adding water dropwise so as to effect phase inversion emulsification; and
   a step of combining and mixing a curing agent and an aggregate with the oil-in-water type emulsion composition.
(11) A concrete structure including: a concrete framework; a foundation layer formed on the concrete framework; and an anti-corrosion layer formed on the foundation layer, wherein
   the foundation layer is a cured product of the mortar composition of any one of items (1) to (9) above.
(12) The concrete structure of item (11) above, wherein the anti-corrosion layer is a cured product of an oil-in-water type emulsion composition which contains a (meth)acrylate-based epoxy resin, a polymerizable unsaturated monomer, a curing accelerator, a reactive surfactant, a curing agent and water.
(13) A concrete framework foundation adjusting method including coating the mortar composition of any one of items (1) to (9) above on a concrete framework, and then curing the mortar composition at 0°C to 50°C.

### Advantageous Effects of Invention

According to this invention, it is possible to provide a mortar composition which can be cured at normal temperature, exhibits excellent workability, early strength and hardenability, and can form a foundation layer having good adhesion to an anti-corrosion layer; a method for producing same; and a concrete framework foundation adjusting method. According to this invention, it is also possible to provide a concrete structure provided with a foundation layer having characteristics such as those mentioned above.

### Description of Embodiments

The mortar composition of this invention contains an oil-in-water type emulsion composition, a curing agent and an aggregate. In addition, the oil-in-water type emulsion composition contains a (meth)acrylate-based epoxy resin, a polymerizable unsaturated monomer, a curing accelerator, a reactive surfactant and water.

### <(Meth)acrylate-based epoxy resin>

In this specification, "(meth)acrylate-based epoxy resin" means a product of a reaction between an epoxy resin and an α-β unsaturated monobasic acid. More specifically, this is a product (an esterification product) of a reaction between an epoxy resin having two or more epoxy groups per molecule and a monobasic acid having a carbon-carbon double bond at the α-β position.

The epoxy resin having two or more epoxy groups per molecule is not particularly limited, but examples thereof include bisphenol type epoxy resins, novolac type epoxy resins, halogenated bisphenol type epoxy resins, halogenated novolac type epoxy resins, cyanurate type epoxy resins, and dimer acid-modified epoxy resins. It is possible to use one of these epoxy resins in isolation or a combination of two or more types thereof. Of these, bisphenol type epoxy resins, novolac type epoxy resins and halogenated bisphenol type epoxy resins are preferred. These can be produced using publicly known methods or obtained commercially.

Here, the term "bisphenol type" is not particularly limited, but bisphenol A types, bisphenol AP types, bisphenol B types, bisphenol BP types, bisphenol C types, bisphenol E types, bisphenol F types, bisphenol G types, and the like, are preferred, and bisphenol A types are more preferred. Moreover, "bisphenol A" is 2,2-bis(4-hydroxyphenyl)propane, "bisphenol AP" is 1,1-bis(4-hydroxyphenyl)-1-phenylethane, "bisphenol B" is 2,2-bis(4-hydroxyphenyl)butane, "bisphenol BP" is bis(4-hydroxyphenyl)diphenylmethane, "bisphenol C" is 2,2-bis(3-methyl-4-hydroxyphenyl)propane, "bisphenol E" is 1,1-bis(4-hydroxyphenyl)ethane, "bisphenol F" is bis(4-hydroxyphenyl)methane, and "bisphenol G" is 2,2-bis(4-hydroxy-3-isopropylphenyl)propane.

The term "halogenated" is not particularly limited, but brominated resins are preferred.

Among epoxy resins having two or more epoxy groups per molecule, epoxy resins suitable for this invention are epoxy resins having one epoxy group at both molecular terminals at least.

In addition, the epoxy equivalent weight of the epoxy resin is not particularly limited, but is preferably 130 to 800 g/eq, more preferably 150 to 600 g/eq, and further preferably 150 to 400 g/eq.

The α-β unsaturated monobasic acid is not particularly limited, but examples thereof include acrylic acid, methacrylic acid and crotonic acid. It is possible to use one of these monobasic acids in isolation or a combination of two or more types thereof. Of these, acrylic acid and methacrylic acid are preferred, and methacrylic acid is more preferred.

The reaction between an epoxy resin and an α-β unsaturated monobasic acid is not particularly limited, and can be carried out in accordance with publicly known methods. Specifically, it is possible to use a method including mixing an epoxy resin and an α-β unsaturated monobasic acid at quantities whereby the equivalent amount of epoxy groups in the epoxy resin and the equivalent amount of acid groups (carboxyl groups) in the α-β unsaturated monobasic acid are approximately the same, and carrying out a reaction, preferably in the atmosphere in the presence of a stabilizer, at a temperature of preferably 80°C to 150°C, more preferably 90°C to 140°C, and further preferably 100°C to 140°C, until the acid value reaches preferably 30 mg KOH/g or less, more preferably 4 to 25 mg KOH/g, and further preferably 6 to 20 mg KOH/g. In particular, by controlling the acid value within the range mentioned above, the stability of an oil-in-water type emulsion composition formed using the (meth)acrylate-based epoxy resin increases.

The stabilizer used in the reaction between the epoxy resin and the α-β unsaturated monobasic acid is not particularly limited, and it is possible to use a publicly known polymerization inhibitor. The polymerization inhibitor is not particularly limited, and examples thereof include hydroquinone compounds such as hydroquinone, methylhydroquinone, trimethylhydroquinone and t-butylhydroquinone; thioether compounds such as phenothiazine and distearyl thiodipropionate; copper salts such as copper dialkyldithiocarbamates (the alkyl groups are methyl groups, ethyl groups, propyl groups or butyl groups), copper acetate, copper salicylate, copper thiocyanate, copper nitrate, copper chloride, copper carbonate, copper hydroxide and copper acrylate; and manganese salts such as manganese dialkyldithiocarbamates (the alkyl groups are methyl groups, ethyl groups, propyl groups or butyl groups), manganese diphenyldithiocarbamate, manganese formate, manganese acetate, manganese octanoate, manganese naphthenate, manganese permanganate and manganese ethylenediamine tetraacetate. It is possible to use one of these polymerization inhibitors in isolation or a combination of two or more types thereof.

The (meth)acrylate-based epoxy resin used in this invention may be modified. The type of modification is not particularly limited, and examples thereof include urethane modification, phenol modification, cresol modification, acid modification, acid anhydride modification, acid pendant modification, phosphoric acid pendant modification, silicone modification, allyl ether modification, acetoacetylation modification and partial esterification modification.

In addition, the (meth)acrylate-based epoxy resin used in this invention may be one type used in isolation, or a combination of two or more types.

### <Polymerizable unsaturated monomer>

In this specification, "polymerizable unsaturated monomer" means a monomer having a polymerizable unsaturated group. The polymerizable unsaturated monomer achieves the effect of facilitating formation of a cured layer (foundation layer) when the mortar composition of this invention is cured at normal temperature. Moreover, in this specification, the (meth)acrylate-based epoxy resin and the polymerizable unsaturated monomer are together referred to as "the resin component" in some cases.

The polymerizable unsaturated monomer is not particularly limited, but examples thereof include alkyl (meth)acrylates, alkenyl (meth)acrylates, alkylene glycol di(meth)acrylates, alkoxyalkyl (meth)acrylates, dialkylamino alkyl (meth)acrylates, acrylonitrile, styrene and derivatives thereof, and vinyl compounds other than these. It is possible to use one of these polymerizable unsaturated monomers in isolation or a combination of two or more types thereof.

The alkyl (meth)acrylate is not particularly limited, but examples thereof include methyl (meth)acrylate, ethyl (meth)acrylate, butyl (meth)acrylate and 2-ethylhexyl (meth)acrylate. The number of carbon atoms in the alkyl group of the alkyl (meth)acrylate is preferably 1 to 10, more preferably 1 to 8, and further preferably 1 to 6.

The alkenyl (meth)acrylate is not particularly limited, but examples thereof include allyl (meth)acrylate. The number of carbon atoms in the alkenyl group of the alkenyl (meth)acrylate is preferably 3 to 10, more preferably 3 to 8, and further preferably 3 to 6.

The alkylene glycol di(meth)acrylate is not particularly limited, but examples thereof include ethylene glycol di(meth)acrylate. The number of carbon atoms in the alkylene glycol moiety of the alkylene glycol di(meth)acrylate is preferably 2 or 3, and more preferably 2.

The alkoxyalkyl (meth)acrylate is not particularly limited, but examples thereof include methoxyethyl (meth)acrylate and butoxyethyl (meth)acrylate. In the alkoxyalkyl (meth)acrylate, the number of carbon atoms in the alkoxy group is preferably 1 to 10, more preferably 1 to 8, and further preferably 1 to 5, and the number of carbon atoms in the alkyl group is preferably 1 to 5, more preferably 1 to 4, and further preferably 1 to 3.

The dialkylamino alkyl (meth)acrylate is not particularly limited, but examples thereof include dimethylaminoethyl (meth)acrylate and diethylaminoethyl (meth)acrylate. In the dialkylamino alkyl (meth)acrylate, the alkyl groups in the dialkylamino group may be the same as, or different from, each other, and the number of carbon atoms in the alkyl groups is preferably 1 to 10, more preferably 1 to 5, and further preferably 1 to 3. In addition, the dialkylamino group is substituted, and the number of carbon atoms in an alkyl group that bonds to the oxygen atom in an acryloyloxy group is preferably 1 to 5, more preferably 1 to 4, and further preferably 1 to 3.

The styrene derivative is not particularly limited, but examples thereof include α-methylstyrene, o-divinylbenzene, m-divinylbenzene and p-divinylbenzene.

The vinyl compound is not particularly limited, but examples thereof include vinyl esters such as vinyl acetate and vinyl propionate; and halogenated vinyl compounds such as vinylidene chloride.

Of the various polymerizable unsaturated monomers mentioned above, styrene, derivatives thereof and alkylene glycol di(meth)acrylates are preferred, styrene and ethylene glycol di(meth)acrylate are more preferred, styrene and ethylene glycol dimethacrylate are further preferred, and styrene is particularly preferred.

The content of the polymerizable unsaturated monomer in the oil-in-water type emulsion composition is not particularly limited, but is preferably 1 to 200 parts by mass, more preferably 5 to 100 parts by mass, further preferably 10 to 80 parts by mass, yet more preferably 15 to 60 parts by mass, and particularly preferably 20 to 55 parts by mass, relative to 100 parts by mass of the (meth)acrylate-based epoxy resin. In particular, if the content of the polymerizable unsaturated monomer is 1 part by mass or more, curing at normal temperature is facilitated. In addition, if the content of the polymerizable unsaturated monomer is 200 parts by mass or less, the strength of the cured product (the foundation layer) is improved.

### <Curing accelerator>

The curing accelerator is not particularly limited, and should be selected according to the type of curing agent being used in the mortar composition of this invention. For example, in cases where the curing agent is an organic peroxide, a curing accelerator able to reduce the organic peroxide can be used. The curing accelerator is not particularly limited, but examples thereof include metal acetyl acetates such as copper acetyl acetate, vanadium acetyl acetate, cobalt acetyl acetate, manganese acetyl acetate and iron acetyl acetate; metal soaps such as iron naphthenate, cobalt naphthenate, cobalt octylate and manganese octylate; vanadium compounds such as divanadium pentoxide; metal sulfides such as cobalt sulfide, copper sulfide, manganese sulfide, nickel sulfide and iron sulfide; and amines such as N,N-dimethylaniline, triethylamine, tripropylamine, tributylamine, ethylene diethanolamine and N,N-dimethyltoluidine. It is possible to use one of these curing accelerators in isolation or a combination of two or more types thereof. In particular, in cases where one curing accelerator is used in isolation, a metal soap selected from among those mentioned above is preferred, and cobalt octylate is more preferred. In particular, in cases where two curing accelerators are used in combination, a combination of a metal soap (and especially cobalt octylate) and an amine is preferred.

The content of the curing accelerator in the oil-in-water type emulsion composition is not particularly limited, but is preferably 0.1 to 10 parts by mass, more preferably 0.3 to 7 parts by mass, further preferably 0.3 to 5 parts by mass, and particularly preferably 0.3 to 3 parts by mass, relative to 100 parts by mass of the (meth)acrylate-based epoxy resin. In particular, if the content of the curing accelerator is 0.1 parts by mass or more, curing at normal temperature is facilitated. In addition, if the content of the curing accelerator is 10 parts by mass or less, it is possible to prevent the advantageous effect achieved by the curing accelerator from plateauing, thereby enabling production costs to be reduced.

### <Reactive surfactant>

A reactive surfactant is a component that improves the water resistance, acid resistance and base resistance of the cured product (foundation layer) formed from the mortar composition of this invention. Therefore, in cases where a non-reactive surfactant is used, it is not possible to improve the water resistance, acid resistance and base resistance of the cured product (foundation layer).

In this specification, "reactive" means having at least one radical-reactive carbon-carbon double bond in the molecule. Conversely, "non-reactive" means not having a radical-reactive carbon-carbon double bond in the molecule.

Reactive surfactants include ionic reactive surfactants and non-ionic reactive surfactants, and it is possible to use at least one type selected from among these, but it is preferable to use a combination of an ionic reactive surfactant and a non-ionic reactive surfactant.

The ionic reactive surfactant can be an anionic reactive surfactant, a cationic reactive surfactant or an amphoteric reactive surfactant, but an anionic reactive surfactant is preferred from the perspective of ease of emulsification.

The anionic reactive surfactant is not particularly limited, but examples thereof include an ammonium salt of an (α-sulfo-ω-(1-alkoxymethyl-2-(2-propenyloxy)ethoxy)-poly(oxy-1,2-ethanediyl) [such as ADEKA REASOAP (trademark) SR-10 and SR-1025 available from Adeka Corporation], an ammonium salt of (α-sulfo-ω-(1-(nonylphenoxy)methyl-2-(2-propenyloxy)ethoxy)-poly(oxy-1,2-ethanediyl) [such as ADEKA REASOAP (trademark) SE-10 and SE-1025A available from Adeka Corporation], an ammonium salt of a polyoxyethylene alkyl propenyl phenyl ether sulfate ester [such as AQUALON (trademark) HS-10, HS-5, BC-10 and BC-5 available from DKS Co. Ltd.], an ammonium salt of an α-sulfonato-ω-{1-(allyloxymethyl)-alkyloxy}polyoxyethylene [such as AQUALON (trademark) KH-10 available from DKS Co. Ltd.], an ammonium salt of a polyoxyalkylene alkenyl ether sulfate [such as LATEMUL (trademark) PD-104 available from Kao Corporation], and alkyl allylsulfosuccinic acid salts [such as LATEMUL (trademark) S-180A and S-180 available from Kao Corporation, and ELEMINOL (trademark) JS-20 available from Sanyo Chemical Industries, Ltd.]. It is possible to use one of these anionic reactive surfactants in isolation or a combination of two or more types thereof. Of these, an ammonium salt of an α-sulfo-ω-(1-alkoxymethyl-2-(2-propenyloxy)ethoxy)-poly(oxy-1,2-ethanediyl) is preferred from the perspectives of the water resistance, acid resistance and base resistance of the cured product (foundation layer).

The non-ionic reactive surfactant is not particularly limited, but examples thereof include α-hydro-ω-(1-alkoxymethyl-2-(2-propenyloxy)ethoxy)-poly(oxy-1,2-ethane diyl)) [ADEKA REASOAP (trademark) ER-10, ER-20, ER-30 and ER-40 available from Adeka Corporation], polyoxyalkylene alkenyl ethers [LATEMUL (trademark) PD-420, PD-430 and PD-450 available from Kao Corporation], and polyoxyethylene alkylpropenyl phenyl ethers [AQUALON (trademark) RN20, RN30 and RN50 available from DKS Co. Ltd.]. It is possible to use one of these non-ionic reactive surfactants in isolation or a combination of two or more types thereof. Of these, an α-hydro-ω-(1-alkoxymethyl-2-(2-propenyloxy)ethoxy)-poly(oxy-1,2-ethanediyl)) is preferred from the perspectives of the water resistance, acid resistance and base resistance of the cured product (foundation layer).

In addition to those listed above, it is possible to use publicly known anionic reactive surfactants and non-ionic reactive surfactants disclosed in Japanese Patent Application Publication Nos. S62-104802, S63-23725, S63-240931, etc.

In cases where a combination of an ionic reactive surfactant (and especially an anionic reactive surfactant) and a non-ionic reactive surfactant is used, the content of the non-ionic reactive surfactant is preferably 80 mass% or more, and more preferably 90 mass% or more, relative to the overall reactive surfactant quantity.

The content of a reactive surfactant in the oil-in-water type emulsion composition is not particularly limited, but is preferably 1 to 50 parts by mass, more preferably 5 to 45 parts by mass, further preferably 10 to 40 parts by mass, yet more preferably 15 to 38 parts by mass, and particularly preferably 15 to 36 parts by mass, relative to 100 parts by mass of the (meth)acrylate-based epoxy resin. In particular, if the content of a reactive surfactant is 1 part by mass or more, the stability of the oil-in-water type emulsion composition is improved. In addition, if the content of a reactive surfactant is 50 parts by mass or less, it becomes easier to form a cured product (foundation layer) and the water resistance, acid resistance and base resistance of the cured product (foundation layer) is improved.

A combination of a reactive surfactant mentioned above and a non-reactive surfactant may be used in the oil-in-water type emulsion composition. In cases where a non-reactive surfactant is also used, the content thereof is preferably 80 parts by mass or less, more preferably 50 parts by mass or less, further preferably 30 parts by mass or less, and particularly 10 parts by mass or less, relative to 100 parts by mass of the reactive surfactant.

The non-reactive surfactant is not particularly limited, but it is possible to use a publicly known non-reactive anionic surfactant, cationic surfactant, amphoteric surfactant or non-ionic surfactant.

The non-reactive anionic surfactant is not particularly limited, but examples thereof include higher alcohol sulfate ester salts such as sodium lauryl sulfate; alkylbenzene sulfonate salts such as sodium dodecylbenzene sulfonate; alkylnaphthalene sulfonate salts; potassium alkenyl succinates; dialkylsulfosuccinate salts; semi-hardened beef tallow fatty acid salts such as semi-hardened potassium beef tallow fatty acid; alkyl diaryl ether disulfonate salts such as sodium alkyl diphenyl ether disulfonate; polyoxyalkylene alkyl ether sulfate ester salts such as polyoxyethylene alkyl ether sulfate ester salts; polyoxyalkylene alkyl aryl ether sulfate ester salts such as polyoxyethylene alkyl phenyl ether sulfate ester salts; polyoxyalkylene alkyl ether acetate salts such as sodium polyoxyethylene lauryl ether acetate; sodium lauroyl sarcosinate, sodium N-lauroylmethyl taurate, sodium N-cocoylmethyl taurate and sodium β-naphthalene sulfonate-formalin condensates.

The non-reactive cationic surfactant is not particularly limited, but examples thereof include alkyl ammonium salts such as dodecyl ammonium chloride.

The non-reactive non-ionic surfactant is not particularly limited, but examples thereof include polyoxyethylene alkyl ethers, polyoxyethylene alkyl allyl ethers, polyoxyethylene alkyl phenyl ethers, polyoxyethylene sorbitan fatty acid esters, polyoxyethylene sorbitol fatty acid esters, polyoxyethylene fatty acid esters, polyoxyethylene acyl esters, polyoxyethylene hydrogenated sterols, polyoxyethylene polyoxypropylene alkyl ethers, polyoxyethylene lanolin, polyoxyethylene lanolin alcohols, polyoxyethylene lanolin alcohol ethers and polyoxyethylene lanolin fatty acid esters.

It is possible to use one of the various non-reactive surfactants mentioned above, or a combination of two or more types thereof.

### <Water>

The type of water is not particularly limited, but it is preferable to use pure water such as ion exchanged water or distilled water.

The content of water in the oil-in-water type emulsion composition is not particularly limited, but is preferably 10 to 200 parts by mass, more preferably 10 to 150 parts by mass, further preferably 10 to 100 parts by mass, yet more preferably 10 to 70 parts by mass, and particularly preferably 10 to 50 parts by mass, relative to 100 parts by mass of the (meth)acrylate-based epoxy resin. In particular, if the content of water is 10 parts by mass or more, the emulsion composition readily forms an oil-in-water state and the stability of the emulsion composition improves. In addition, if the content of water is 200 parts by mass or less, curing at normal temperature is facilitated.

### <Other components in oil-in-water type emulsion composition>

A variety of publicly known additives, such as water-soluble polymers, fillers, reinforcing materials and pigments, may be blended in the oil-in-water type emulsion composition if necessary. In particular, by blending a water-soluble polymer, the stability of the (meth)acrylate-based epoxy resin in the oil-in-water type emulsion composition is improved.

The water-soluble polymer is not particularly limited, but examples thereof include poly(vinyl alcohol), polyesters, polyethylene glycol and polyvinylpyrrolidone. It is possible to use one of these water-soluble polymers in isolation or a combination of two or more types thereof.

The filler is not particularly limited, but examples thereof include hydraulic silicate materials, calcium carbonate materials, hydrated lime, clay, alumina powder, silica rock powder, talc, quartz powder, barium sulfate, silica powder, glass powders, glass beads, glass fillers, glass flakes, mica, aluminum hydroxide and cellulose. Of these, glass powders, glass fillers and quartz powders are preferred. In addition, it is possible to use one of these fillers in isolation or a combination of two or more types thereof.

Examples of reinforcing materials include glass fibers, carbon fibers and aramid fibers. It is possible to use one of these reinforcing materials in isolation or a combination of two or more types thereof.

The content of these other components in the oil-in-water type emulsion composition is not particularly limited as long as the advantageous effect of this invention is not impaired, but is preferably 30 parts by mass or less, more preferably 20 parts by mass or less, and further preferably 10 parts by mass or less, relative to 100 parts by mass of the (meth)acrylate-based epoxy resin.

### <Method for producing oil-in-water type emulsion composition>

The method for producing an oil-in-water type emulsion composition is not particularly limited as long as an oil-in-water type emulsion composition can be produced, and it is possible to use any method that is publicly known in this technical field. Of these use of a method including mixing a (meth)acrylate-based epoxy resin, a polymerizable unsaturated monomer, a curing accelerator and a reactive surfactant and then adding water dropwise so as to effect phase inversion emulsification is preferred as the method for producing an oil-in-water type emulsion composition. In this method, by adding the water "dropwise" rather than all at once, it is possible to smoothly change from a W/O type (water-in-oil type) emulsion composition in which the continuous phase is the oil phase to a O/W type (oil-in-water type) emulsion composition in which the continuous phase is water. In addition, by adding the water dropwise, the dispersed phase is in a much more finely dispersed state and the stability of the oil-in-water type emulsion composition increases. Furthermore, the water resistance, acid resistance and base resistance of a cured product (foundation layer) formed from a mortar composition that uses this oil-in-water type emulsion composition also increase.

### <Curing agent>

The curing agent is not particularly limited, but it is generally possible to use a curing agent used to cure an unsaturated polyester or a (meth)acrylate-based epoxy resin. An organic peroxide can be advantageously used as this type of curing agent. The organic peroxide preferably has a 10-hour half-life temperature of 30°C to 170°C. The organic peroxide is not particularly limited but examples thereof include ketone peroxides such as methyl ethyl ketone peroxide, cyclohexanone peroxide, 3,3,5-trimethylcyclohexanone peroxide and methylcyclohexanone peroxide; hydroperoxides such as t-butyl hydroperoxide, cumene hydroperoxide, diisopropylbenzene hydroperoxide and 2,5-dimethylhexanone-2,5-hydroperoxide; and peroxy esters such as t-butyl peroxybenzoate and t-butyl peroxylaurate. It is possible to use one of these organic peroxides in isolation, or a combination of two or more types thereof.

The content of the curing agent in the mortar composition is not particularly limited, but is preferably 1 to 30 parts by mass, more preferably 3 to 25 parts by mass, and further preferably 5 to 20 parts by mass, relative to 100 parts by mass of the oil-in-water type emulsion composition. In particular, if the content of the curing agent is 1 part by mass or more, the mortar composition can be sufficiently cured. In addition, if the content of the curing agent is 30 parts by mass or less, the curing speed of the mortar composition does not become excessively fast, meaning that a suitable working life can be ensured.

### <Aggregate>

The aggregate is not particularly limited, and it is possible to use aggregates used in mortars and concretes. The aggregate is not particularly limited, but examples thereof include crushed stone, sandstone, calcite, marble, quartz, limestone, silica sand, quartzite and river sand. In addition, it is also possible to use a lightweight aggregate such as sintered shale, pearlite, shirasu balloons and glass balloons from the perspective of reducing weight. Of these, silica sand is preferred, and silica sand No. 7 and silica sand No. 8 are more preferred. In addition, the aggregate may be complexed with a cement such as ordinary Portland cement.

The content of the aggregate in the mortar composition is not particularly limited, but is preferably 5 to 300 parts by mass, more preferably 10 to 200 parts by mass, further preferably 20 to 150 parts by mass, and particularly preferably 30 to 100 parts by mass, relative to 100 parts by mass of the oil-in-water type emulsion composition. In particular, if the content of the aggregate is 5 parts by mass or more, a practical degree of fluidity can be ensured. In addition, if the content of the aggregate is 300 parts by mass or less, the amount or mortar composition that sticks to a trowel decreases and a decrease in workability can be prevented.

### <Other components in mortar composition>

A variety of publicly known additives, such as fillers, reinforcing materials and pigments, may be blended in the mortar composition if necessary in order to achieve the desired characteristics. These additives may be the same as, or different from, other components in the oil-in-water type emulsion composition. Blending of additives is preferably selected in view of the stability of each composition. For example, in cases where the stability of the oil-in-water type emulsion composition would decrease as a result of blending an additive, it is preferable for the additive to be blended in the mortar composition.

In cases where other components are blended in the mortar composition, the content values thereof are not particularly limited as long as the advantageous effect of this invention is not impaired. For example, in cases where a filler is blended in the mortar composition, the content of the filler in the mortar composition is not particularly limited, but is generally 5 to 300 parts by mass, preferably 10 to 200 parts by mass, more preferably 20 to 150 parts by mass, and further preferably 25 to 100 parts by mass, relative to 100 parts by mass of the oil-in-water type emulsion composition.

### <Method for producing mortar composition>

The method for producing a mortar composition is not particularly limited, and it is possible to use any method that is publicly known in this technical field. For example, a mortar composition can be produced by blending the oil-in-water type emulsion composition with the curing agent and the aggregate, and then mixing.

A mortar composition produced in this way can be cured at normal temperature and exhibits excellent workability, early strength and curability. In addition, in cases where this mortar composition is used as a foundation adjusting material of a concrete framework, it is possible to form a foundation layer that exhibits good adhesion to an anti-corrosion layer.

### <Concrete framework foundation adjusting method>

In the concrete framework foundation adjusting method of this invention, the mortar composition of this invention is used as a foundation adjusting material. This foundation adjusting method is not particularly limited, and it is possible to use any method that is publicly known in this technical field. Specifically, the mortar composition of this invention should be coated on a concrete framework and then cured.

Because the mortar composition of this invention can be cured at normal temperature, heating equipment or the like is not particularly required. From the perspective of curing speed, the curing temperature of the mortar composition of this invention is generally 0°C to 50°C, preferably 5°C to 50°C, more preferably 10°C to 50°C, further preferably 15°C to 45°C, and particularly preferably 15°C to 40°C.

### <Concrete structure>

The concrete structure of this invention has a concrete framework, a foundation layer formed on the concrete framework, and an anti-corrosion layer formed on the foundation layer.

In this concrete structure, the foundation layer is a cured product of the mortar composition of this invention. The foundation layer can be formed in accordance with the concrete framework foundation adjusting method mentioned above.

The anti-corrosion layer is not particularly limited, and it is possible to use any method that is publicly known in this technical field. For example, the anti-corrosion layer can be formed using a vinyl ester resin-based lining material.

In addition, the anti-corrosion layer may be formed using an oil-in-water type emulsion composition containing a (meth)acrylate-based epoxy resin, a polymerizable unsaturated monomer, a curing accelerator, a reactive surfactant, a curing agent and water. Components used in this oil-in-water type emulsion composition can be the same as components used in the mortar composition. A cured product formed from this oil-in-water type emulsion composition exhibits excellent water resistance, acid resistance and base resistance and functions as an anti-corrosion layer. In addition, because a cured product formed from this oil-in-water type emulsion composition is the same as the resin matrix of a cured product of the foundation layer, good adhesion is achieved between the foundation layer and the anti-corrosion layer.

The content values of the components in the oil-in-water type emulsion composition used to form the anti-corrosion layer are not particularly limited, and should be adjusted according to the oil-in-water type emulsion composition used in the mortar composition. Specifically, in the oil-in-water type emulsion composition used to form the anti-corrosion layer, the curing agent should be blended at a quantity of 0.5 to 30 parts by mass, more preferably 1 to 25 parts by mass, further preferably 1.5 to 20 parts by mass, and particularly preferably 2 to 10 parts by mass, relative to 100 parts by mass of the oil-in-water type emulsion composition used in the mortar composition.

### Example

This invention will now be explained in greater detail through the use of examples, but is in no way limited to these examples.

### <Production of oil-in-water type emulsion composition>

### (Synthesis Example 1)

948 g of a novolac type epoxy resin ("EPICRON (trademark) N-740", epoxy equivalent weight 170 to 190 g/eq, available from DIC), 451 g of methacrylic acid, 1.2 g of hydroquinone and 6 g of N,N-dimethylbenzylamine were placed in a reaction vessel and allowed to react for 2 hours at 115.5°C while blowing air. The (meth)acrylate-based epoxy resin (A-1) obtained in this reaction had an acid value of 10 mg KOH/g. Next, 0.3 g of hydroquinone and 422 g of styrene (a polymerizable unsaturated monomer) were added to this (meth)acrylate-based epoxy resin (A-1) and dissolved by being thoroughly stirred. The thus obtained resin component is referred to as resin component (VE-1). Moreover, the blending proportion of the polymerizable unsaturated monomer in this resin component is 30 parts by mass relative to 100 parts by mass of the (meth)acrylate-based epoxy resin (A-1).

Next, an oil-in-water type emulsion composition (VEm-1) was obtained by adding 1.3 parts by mass of cobalt octylate and 0.65 parts by mass of dimethylaniline as curing accelerators, 3.25 parts by mass of an anionic reactive surfactant ("ADEKA REASOAP (trademark) SR-10" available from Adeka Corporation) and 32.5 parts by mass of a non-ionic reactive surfactant ("ADEKA REASOAP (trademark) ER-30" available from Adeka Corporation) as reactive surfactants to resin component (VE-1) containing 100 parts by mass of the (meth)acrylate-based epoxy resin (A-1) and 30 parts by mass of styrene (a polymerizable unsaturated monomer), mixing, and carrying out phase inversion emulsification by stirring while adding 40 parts by mass of water dropwise at a rate of 100 mL/h. No surfactant separation was observed in this oil-in-water type emulsion composition (VEm-1), and stability was good.

### (Synthesis Example 2)

A resin component (VE-2) was prepared in the same way as in Synthesis Example 1, except that 422 g of ethylene glycol dimethacrylate was used instead of 422 g of styrene. Next, an oil-in-water type emulsion composition (VEm-2) was obtained in the same way as in Synthesis Example 1, except that resin component (VE-2) was used instead of resin component (VE-1). No surfactant separation was observed in this oil-in-water type emulsion composition (VEm-2), and stability was good.

### (Synthesis Example 3)

1043 g of a bisphenol A type epoxy resin ("ARALDITE (trademark) AER-280", epoxy equivalent weight 280 g/eq, available from Asahi Kasei E-materials Corp.), 340 g of methacrylic acid, 0.4 g of hydroquinone and 3.3 g of N,N-dimethylbenzylamine were placed in a reaction vessel and allowed to react for 2 hours at 125.5°C while blowing air. The (meth)acrylate-based epoxy resin (A-2) obtained in this reaction had an acid value of 10 mg KOH/g. Next, 0.3 g of hydroquinone and 624.15 g of styrene (a polymerizable unsaturated monomer) were added and dissolved by being thoroughly stirred. The thus obtained resin component is referred to as resin component (VE-3). Moreover, the blending proportion of the polymerizable unsaturated monomer in this resin component is 45 parts by mass relative to 100 parts by mass of the (meth)acrylate-based epoxy resin (A-2).

Next, an oil-in-water type emulsion composition (VEm-3) was obtained by adding 1.45 parts by mass of cobalt octylate and 0.75 parts by mass of dimethylaniline as curing accelerators, 3.65 parts by mass of an anionic reactive surfactant ("ADEKA REASOAP (trademark) SR-10" available from Adeka Corporation) and 36.5 parts by mass of a non-ionic reactive surfactant ("ADEKA REASOAP (trademark) ER-30" available from Adeka Corporation) as reactive surfactants to resin component (VE-3) containing 100 parts by mass of the (meth)acrylate-based epoxy resin (A-2) and 45 parts by mass of styrene (a polymerizable unsaturated monomer), mixing, and carrying out phase inversion emulsification by stirring while adding 45 parts by mass of water dropwise at a rate of 100 mL/h. No surfactant separation was observed in this oil-in-water type emulsion composition (VEm-3), and stability was good.

### (Synthesis Example 4)

A resin component (VE-4) was prepared in the same way as in Synthesis Example 3, except that 624.15 g of ethylene glycol dimethacrylate was used instead of 624.15 g of styrene. Next, an oil-in-water type emulsion composition (VEm-4) was obtained in the same way as in Synthesis Example 3, except that resin component (VE-4) was used instead of resin component (VE-3). No surfactant separation was observed in this oil-in-water type emulsion composition (VEm-4), and stability was good.

The compositional makeups of the oil-in-water type emulsion compositions obtained in Synthesis Examples 1 to 4 are shown in Table 1.

**[Table 1]**

| | | Synthesis Example 1 (VEm-1) | Synthesis Example 2 (VEm-2) | Synthesis Example 3 (VEm-3) | Synthesis Example 4 (VEm-4) |
|---|---|---|---|---|---|
| (Meth)acrylate-based epoxy resin | (A-1) | 100 | 100 | -- | -- |
| | (A-2) | -- | -- | 100 | 100 |
| Polymerizable unsaturated monomer | Styrene | 30 | -- | 45 | -- |
| | Ethylene glycol dimethacrylate | -- | 30 | -- | 45 |
| Curing accelerator | Cobalt octylate | 1.3 | 1.3 | 1.45 | 1.45 |
| | Dimethylaniline | 0.65 | 0.65 | 0.75 | 0.75 |
| Reactive surfactant | Anionic | 3.25 | 3.25 | 3.65 | 3.65 |
| | Non-ionic | 32.5 | 32.5 | 36.5 | 36.5 |
| Water | | 40 | 40 | 45 | 45 |

### <Production of mortar composition>

### (Example 1)

A mortar composition was obtained by mixing 100 parts by mass of the oil-in-water type emulsion composition (VEm-1), 10 parts by mass of benzoyl peroxide ("NYPER (trademark) FF" available from NOF Corporation) as a curing agent, 40 parts by mass of silica sand no. 8 as an aggregate and 50 parts by mass of "CRYSTALITE (trademark) quartz filler" (available from Tatsumori Ltd.) as a filler for 2 minutes at 1500 rpm using a stirrer.

### (Example 2)

A mortar composition was obtained in the same way as in Example 1, except that oil-in-water type emulsion composition (VEm-2) was used instead of oil-in-water type emulsion composition (VEm-1).

### (Example 3)

A mortar composition was obtained in the same way as in Example 2, except that the blending quantity of oil-in-water type emulsion composition (VEm-2) was changed to 50 parts by mass.

### (Example 4)

A mortar composition was obtained in the same way as in Example 1, except that oil-in-water type emulsion composition (VEm-3) was used instead of oil-in-water type emulsion composition (VEm-1).

### (Example 5)

A mortar composition was obtained in the same way as in Example 1, except that oil-in-water type emulsion composition (VEm-4) was used instead of oil-in-water type emulsion composition (VEm-1).

### (Comparative Example 1)

A mortar composition was obtained in the same way as in Example 1, except that resin component (VE-1) was used instead of oil-in-water type emulsion composition (VEm-1) and the mixing time was 1 minute.

### (Comparative Example 2)

A mortar composition was obtained in the same way as in Example 1, except that resin component (VE-2) was used instead of oil-in-water type emulsion composition (VEm-1) and the mixing time was 1 minute.

### (Comparative Example 3)

A mortar composition was obtained by mixing 100 parts by mass of the resin component (VE-2), 1 part by mass of benzoyl peroxide ("NYPER (trademark) FF" available from NOF Corporation) as a curing agent, 5 parts by mass of silica sand no. 8 as an aggregate and 4 parts by mass of "CRYSTALITE (trademark) quartz filler" (available from Tatsumori Ltd.) as a filler for 2 minutes at 1500 rpm using a stirrer.

### (Comparative Example 4)

A mortar composition was obtained by mixing 15 parts by mass of a bisphenol A type epoxy resin emulsion ("ADEKA RESIN EM-101-50" available from Adeka Corporation), 15 parts by mass of a water-soluble polyamine ("Fujicure FXI-919" available from T&K Toka Corporation), 25 parts by mass of silica sand no. 8, 25 parts by mass of silica sand no. 7, 25 parts by mass of silica sand no. 6 and 25 parts by mass of ordinary Portland cement for 2 minutes at 1500 rpm using a stirrer.

### (Comparative Example 5)

A mortar composition was obtained by mixing 25 parts by mass of an acrylic emulsion ("POLYSOL (trademark) AE-1000" available from Showa Denko K.K.), 25 parts by mass of silica sand no. 8, 25 parts by mass of silica sand no. 7, 25 parts by mass of silica sand no. 6 and 25 parts by mass of rapid hardening cement for 2 minutes at 1500 rpm using a stirrer.

The compositional makeups of the mortar compositions obtained in the examples and comparative examples mentioned above are shown in Table 2. Moreover, the units in the table are parts by mass.

**[Table 2]**

| | Example | | | | | Comparative Example | | | | |
|---|---|---|---|---|---|---|---|---|---|---|
| | 1 | 2 | 3 | 4 | 5 | 1 | 2 | 3 | 4 | 5 |
| VEm-1 | 100 | -- | -- | -- | -- | -- | -- | -- | -- | -- |
| VEm-2 | -- | 100 | 50 | -- | -- | -- | -- | -- | -- | -- |
| VEm-3 | -- | -- | -- | 100 | -- | -- | -- | -- | -- | -- |
| VEm-4 | -- | -- | -- | -- | 100 | -- | -- | -- | -- | -- |
| VE-1 | -- | -- | -- | -- | -- | 100 | -- | -- | -- | -- |
| VE-2 | -- | -- | -- | -- | -- | -- | 100 | 100 | -- | -- |
| Bisphenol A type epoxy resin emulsion | -- | -- | -- | -- | -- | -- | -- | -- | 15 | -- |
| Water-soluble polyamine | -- | -- | -- | -- | -- | -- | -- | -- | 15 | -- |
| Acrylic emulsion | -- | -- | -- | -- | -- | -- | -- | -- | -- | 25 |
| Curing agent | 10 | 10 | 10 | 10 | 10 | 10 | 10 | 1 | -- | -- |
| Silica sand no. 8 | 50 | 50 | 50 | 50 | 50 | 50 | 50 | 5 | 25 | 25 |
| Silica sand no. 7 | -- | -- | -- | -- | -- | -- | -- | -- | 25 | 25 |
| Silica sand no. 6 | -- | -- | -- | -- | -- | -- | -- | -- | 25 | 25 |
| Filler | 40 | 40 | 40 | 40 | 40 | 40 | 40 | 4 | -- | -- |
| Ordinary Portland cement | -- | -- | -- | -- | -- | -- | -- | -- | 25 | -- |
| Rapid hardening cement | -- | -- | -- | -- | -- | -- | -- | -- | -- | 25 |

The mortar compositions obtained in the examples and comparative examples mentioned above were subjected to the following evaluations.

### (Working life)

A mortar composition was allowed to stand in an environment having a temperature of 23°C and a relative humidity of 65%. In this evaluation, a case in which the mortar composition immediately gelled is indicated by X, a case in which the fluidity of the mortar composition decreased within approximately 30 minutes is indicated by Δ, a case in which the mortar composition was fluid even after approximately 30 minutes had passed is indicated by O, and a case in which the mortar composition was fluid even after approximately 1 hour had passed is indicated by OO.

### (Workability)

A mortar composition was coated on a slate sheet using a masonry trowel, and the state of adhesion of the mortar composition to the masonry trowel and the coatability of the mortar composition were evaluated. In this evaluation, a case in which the mortar composition adhered to the masonry trowel and a troweling operation was difficult is indicated by X, a case in which the mortar composition adhered to the masonry trowel but a troweling operation was possible is indicated by Δ, a case in which the mortar composition did not adhere to the masonry trowel and a troweling operation was possible is indicated by O, and a case in which the mortar composition did not adhere to the masonry trowel and a troweling operation was good is indicated by ○○.

### (Dripping)

A mortar composition was coated at a thickness of 3 mm on a slate sheet using a masonry trowel, and the slate sheet was left to stand in an upright position. In this evaluation, a case in which dripping occurred is indicated by X, and a case in which dripping did not occur is indicated by ○.

### (Curability)

A mortar composition was placed in a 100 mL polypropylene cup and left to stand for 24 hours in an environment having a temperature of 23°C and a relative humidity of 65%. In this evaluation, a case in which the surface or inner part of the mortar composition had not cured is indicated by X, a case in which the inner part of the mortar composition had only partially cured but the surface of the mortar composition had completely cured is indicated by Δ, and a case in which both the surface and the inner part of the mortar composition had completely cured is indicated by ○.

### (Adhesion to concrete framework)

A mortar composition was coated at a coating weight of 1.0 kg/m² on a JIS concrete sidewalk flag (measuring 300 mm × 300 mm × 60 mm) using a masonry trowel and then cured for 24 hours in an environment having a temperature of 23°C and a relative humidity of 65%, thereby forming a cured product of the mortar composition. The thus obtained test sample was fixed to a (tensile) metal jig measuring 40 mm × 40 mm using an epoxy-based adhesive, a cut was made that reached the JIS concrete sidewalk flag, and adhesion between the JIS concrete sidewalk flag and the cured product of the mortar composition was evaluated using an architectural type adhesive strength tester. The metal jig was one in which the surface layer part of the mounting surface was polished using #150 sandpaper specified in "sandpapers" under JIS R 6252. In this evaluation, a case in which the adhesive strength was less than 2.0 N/mm² and the breakdown location was the cured product of the mortar composition is indicated by X, and a case in which the adhesive strength was 2.0 N/mm² or more and the breakdown location was the JIS concrete sidewalk flag is indicated by ○.

### (Adhesion to anti-corrosion layer)

A mortar composition was coated at a coating weight of 1.0 kg/m² on a JIS concrete sidewalk flag (measuring 300 mm × 300 mm × 60 mm) using a masonry trowel and then cured for 24 hours in an environment having a temperature of 23°C and a relative humidity of 65%, thereby forming a cured product of the mortar composition (a foundation layer).

Next, 3 parts by mass of a curing agent ("328E", t-butyl peroxybenzoate·cumene hydroperoxide, available from Kayaku Akzo Corporation) was added to 100 parts by mass of the oil-in-water type emulsion composition (VEm-2) and mixed. The thus obtained oil-in-water type emulsion composition was coated at a coating weight of 500 g/m² on the foundation layer using a masonry trowel. An anti-corrosion layer having a thickness of 1 mm or more was formed by coating three layers (at intervals of 1 coat per day). The anti-corrosion layer was cured for 3 days or more following formation, after which the obtained test sample was fixed to a (tensile) metal jig measuring 40 mm × 40 mm using an epoxy-based adhesive, and a cut was made that reached the JIS concrete sidewalk flag. Adhesion between the foundation layer and anti-corrosion layer and the JIS concrete sidewalk flag was then evaluated using a simple tensile tester (Techno Tester RT-1000LD available from Sanko Techno Co., Ltd.). In this evaluation, a case in which the adhesive strength was less than 2.0 N/mm² and the breakdown location was the foundation layer is indicated by X, and a case in which the adhesive strength was 2.0 N/mm² or more and the breakdown location was the JIS concrete sidewalk flag is indicated by ○.

### (Peeling test)

A test sample was prepared in the same way as for the "Adhesion to anti-corrosion layer" above, and the obtained test sample was subjected to a peeling test in which peeling was forcibly carried out. In this peeling test, the area peeled was 40 mm × 80 mm. In terms of evaluation method, the peeled location was visually observed following the peeling. In this evaluation a case in which the breakdown location was observed on the overall foundation layer is indicated by X, a case in which the breakdown location was observed on a part of the foundation layer is indicated by Δ, and a case in which the breakdown location was observed on the JIS concrete sidewalk flag or the anti-corrosion layer is indicated by ○.

### (Resistance to curing shrinkage)

A test sample was produced in the same way as in the evaluation of "Adhesion to anti-corrosion layer" above, except that a 5 mm thick slate sheet (measuring 300 mm × 200 mm) was used instead of the JIS concrete sidewalk flag (measuring 300 mm × 300 mm × 60 mm) and the region on which the anti-corrosion layer was formed measured 250 mm × 150 mm. Following formation, the anti-corrosion layer was cured for 24 hours or more in an environment having a temperature of 23°C and a relative humidity of 65%, and then subjected to after-curing for 24 hours in an environment having a temperature of 80°C in order to forcibly accelerate curing shrinkage of the anti-corrosion layer. The state of the anti-corrosion layer was then observed visually. In this evaluation, a case in which the anti-corrosion layer completely peeled is indicated by X, a case in which the anti-corrosion layer partially curled is indicated by Δ, and a case in which no change occurred in the anti-corrosion layer is indicated by ○.

These evaluation results are shown in Table 3.

**[Table 3]**

| | Example | | | | | Comparative Example | | | | |
|---|---|---|---|---|---|---|---|---|---|---|
| | 1 | 2 | 3 | 4 | 5 | 1 | 2 | 3 | 4 | 5 |
| Working life | ○ | ○ | ○ | ○ | ○ | X | X | ○ | ○○ | ○○ |
| Workability | ○ | ○ | ○ | ○ | ○ | Δ | Δ | X | ○ | ○ |
| Dripping | ○ | ○ | ○ | ○ | ○ | Δ | Δ | X | ○ | ○ |
| Curability | ○ | ○ | ○ | ○ | ○ | ○ | ○ | ○ | ○ | ○ |
| Adhesion to concrete framework | ○ | ○ | ○ | ○ | ○ | ○ | ○ | ○ | ○ | ○ |
| Adhesion to anti-corrosion layer | ○ | ○ | ○ | ○ | ○ | ○ | ○ | ○ | X | X |
| Peeling test | ○ | ○ | ○ | ○ | ○ | ○ | ○ | ○ | X | X |
| Resistance to curing shrinkage | ○ | ○ | ○ | ○ | ○ | ○ | ○ | ○ | Δ | X |

As shown in Table 3, the mortar compositions of Examples 1 to 5 all achieved good evaluation results.

Conversely, the mortar compositions of Comparative Examples 1 and 2 had a short working life and were unsatisfactory in terms of workability. In addition, the mortar composition of Comparative Example 3 was unsatisfactory in terms of workability and suffered from dripping. Furthermore, the mortar compositions of Comparative Examples 4 and 5 gave foundation layers that were unsatisfactory in terms of adhesion to the anti-corrosion layer.

Moreover, mortar compositions were prepared so as to have the same compositions as Examples 1 to 5 using the emulsions used in Comparative Examples 4 and 5 instead of the oil-in-water type emulsion compositions used in Examples 1 to 5, but because these mortar compositions did not undergo a curing reaction, the evaluations described above were not carried out.

As understood from the results above, this invention can provide a mortar composition which can be cured at normal temperature, exhibits excellent workability, early strength and hardenability, and can form a foundation layer having good adhesion to an anti-corrosion layer; a method for producing same; and a concrete framework foundation adjusting method. According to this invention, it is also possible to provide a concrete structure provided with a foundation layer having characteristics such as those mentioned above.

The present application claims priority on the basis of Japanese Patent Application No. 2015-238589, which was filed on 07 December 2015, and the entire contents of that application are incorporated by reference in the present specification.

## Claims

1. A mortar composition comprising: an oil-in-water type emulsion composition, which contains a (meth)acrylate-based epoxy resin, a polymerizable unsaturated monomer, a curing accelerator, a reactive surfactant and water; a curing agent; and an aggregate.

2. The mortar composition of claim 1, containing 1 to 200 parts by mass of the polymerizable unsaturated monomer, 0.1 to 10 parts by mass of the curing accelerator, 1 to 50 parts by mass of the reactive surfactant and 10 to 200 parts by mass of water relative to 100 parts by mass of the (meth)acrylate-based epoxy resin.

3. The mortar composition of claim 1 or claim 2, containing 1 to 30 parts by mass of the curing agent and 5 to 300 parts by mass of the aggregate relative to 100 parts by mass of the oil-in-water type emulsion composition.

4. The mortar composition of any one of claims 1 to 3, wherein the reactive surfactant is at least one type selected from the group consisting of an ionic reactive surfactant and a non-ionic reactive surfactant.

5. The mortar composition of claim 4, wherein the ionic reactive surfactant is an anionic reactive surfactant.

6. The mortar composition of any one of claims 1 to 5, wherein the polymerizable unsaturated monomer is at least one type selected from the group consisting of an alkyl (meth)acrylate, an alkenyl (meth)acrylate, an alkylene glycol di(meth)acrylate, an alkoxyalkyl (meth)acrylate, a dialkylamino alkyl (meth)acrylate, acrylonitrile, styrene and derivatives thereof, and vinyl compounds other than these.

7. The mortar composition of any one of claims 1 to 6, wherein the curing accelerator is at least one type selected from the group consisting of a metal acetylacetate, a metal soap, a vanadium compound, a metal sulfide and an amine.

8. The mortar composition of any one of claims 1 to 7, wherein the curing agent is at least one type selected from the group consisting of a ketone peroxide, a hydroperoxide and a peroxy ester.

9. The mortar composition of any one of claims 1 to 8, wherein the (meth)acrylate-based epoxy resin is an ester compound of methacrylic acid and a novolac type epoxy resin or bisphenol A type epoxy resin.

10. A method for producing a mortar composition, the method comprising:
a step of obtaining an oil-in-water type emulsion composition by mixing a (meth)acrylate-based epoxy resin, a polymerizable unsaturated monomer, a curing accelerator and a reactive surfactant, and then adding water dropwise so as to effect phase inversion emulsification; and
a step of combining and mixing a curing agent and an aggregate with the oil-in-water type emulsion composition.

11. A concrete structure comprising: a concrete framework; a foundation layer formed on the concrete framework; and an anti-corrosion layer formed on the foundation layer, wherein
the foundation layer is a cured product of the mortar composition of any one of claims 1 to 9.

12. The concrete structure of claim 11, wherein the anti-corrosion layer is a cured product of an oil-in-water type emulsion composition which contains a (meth)acrylate-based epoxy resin, a polymerizable unsaturated monomer, a curing accelerator, a reactive surfactant, a curing agent and water.

13. A concrete framework foundation adjusting method, comprising coating the mortar composition of any one of claims 1 to 9 on a concrete framework, and then curing the mortar composition at 0°C to 50°C.
